# EUROPEAN PATENT SPECIFICATION

(11) **EP 4 318 773 B1**
(45) Date of publication and mention of the grant of the patent: **11.02.2026**
(21) Application number: 22916604.6
(22) Date of filing: 21.12.2022
(51) Int. Cl.: H01M 50/383, A62C 3/16, A62C 3/07, H01M 10/052, H01M 50/204, A62D 1/00, H01M 50/609

(54) **BATTERY PACK, ENERGY STORAGE SYSTEM AND VEHICLE COMPRISING BATTERY PACK**
BATTERIEPACK, ENERGIESPEICHERSYSTEM UND FAHRZEUG MIT BATTERIEPACK
BLOC-BATTERIE, SYSTÈME DE STOCKAGE D'ÉNERGIE ET VÉHICULE COMPRENANT UN BLOC-BATTERIE

(30) Priority: 27.12.2021 KR 20210188749
(43) Date of publication of application: 07.02.2024
(73) Proprietor: LG ENERGY SOLUTION, LTD., Seoul 07335 (KR)
(72) Inventor: KIM, Seung-Hyun, Daejeon 34122 (KR); OH, Young-Hoo, Daejeon 34122 (KR); OK, Seung-Min, Daejeon 34122 (KR); JO, Sang-Hyun, Daejeon 34122 (KR); CHO, Young-Bum, Daejeon 34122 (KR); HONG, Sung-Goen, Daejeon 34122 (KR)
(74) Representative: Plasseraud IP
(86) International application number: PCT/KR2022/021002
(87) International publication number: WO 2023/128462

(56) References cited:
- CN-A- 106 785 182
- CN-A- 109 103 539
- CN-A- 110 199 406
- CN-A- 112 587 834
- CN-U- 206 822 989
- JP-A- 2019 029 245
- KR-A- 20110 090 236
- KR-A- 20210 115 866

## Description

### TECHNICAL FIELD

The present disclosure relates to a battery pack, and an energy storage system and a vehicle including the battery pack, and more particularly, to a battery pack with improved safety, and an energy storage system and a vehicle including the battery pack.

The present application claims priority to Korean Patent Application No. 10-2021-0188749 filed on December 27, 2021 in the Republic of Korea.

### BACKGROUND ART

Secondary batteries have high applicability according to product groups and electrical characteristics such as high energy density, and thus, are commonly applied not only to mobile devices but also to electric vehicles (EVs) or hybrid vehicles (HEVs) driven by electric power sources. Because secondary batteries may radically reduce the use of fossil fuel and do not generate any by-products that come with energy consumption, the secondary batteries are gaining attention as a new alternative energy source for improving eco-friendliness and energy efficiency.

Types of secondary batteries that are currently widely used include lithium-ion batteries, lithium polymer batteries, nickel cadmium batteries, nickel hydride batteries, and nickel zinc batteries. An operating voltage of a unit secondary battery cell, that is, a unit battery cell, ranges from about 2.5 V to about 4.5 V. Accordingly, when a higher output voltage is required, a battery pack may be configured by connecting a plurality of battery cells in series. Also, a battery pack may be configured by connecting a plurality of battery cells in parallel according to charge/discharge capacity required for the battery pack. Accordingly, the number of battery cells included in a battery pack may be set in various ways according to a required output voltage or charge/discharge capacity.

Meanwhile, when a battery pack is configured by connecting a plurality of battery cells in series/parallel, a method of first configuring a battery module including at least one battery cell and adding other elements by using the at least one battery module to configure a battery pack or a battery rack is general.

In addition, recently, as issues such as power shortage or eco-friendly energy have emerged, an energy storage system (ESS) for storing generated power has received a lot of attention. Typically, when such an energy storage system is used, it is easy to construct a power management system such as a smart grid system, so that power supply and demand can be easily controlled in a specific region or city. In addition, as commercialization of electric vehicles is in full swing, such an energy storage system can be applied to electric charging stations capable of charging electric vehicles.

In the case of a battery pack used in such an energy storage system, a plurality of battery modules may be accommodated in an inner space of a pack case. In addition, each battery module may be connected in series and/or parallel to each other to increase the output or capacity of the battery pack. Moreover, in order to increase the energy density of the battery pack, battery modules may exist in a dense state with each other in a very narrow space.

At least one battery module constituting a conventional battery pack generally includes a plurality of battery cells stacked on each other and a module housing accommodating the plurality of battery cells.

In the case of such a conventional battery pack, when overheating occurs in a specific battery cell among the plurality of battery cells of the battery module due to an abnormal situation, the heat generated in the overheated battery cell is transferred to adjacent battery cells as it is, resulting in thermal runaway, which may lead to a greater risk of explosion of adjacent battery modules.

In particular, in the case of a conventional battery pack, the pack case is configured in the form of a box or a mono frame (tube), and a plurality of battery modules are accommodated in the inner space of the pack case in many cases. However, in such a conventional battery pack configuration, the pack case may cause a problem of increasing heat transfer between battery modules. That is, heat generated from an event module, which is a battery module in which a thermal event occurs, may be directly transferred to an adjacent battery module through a method such as thermal radiation, or may be transferred through a pack case through a heat conduction method. In particular, when heat passes through the pack case, a problem in which heat is transferred to a battery module that is not adjacent to the event module and is far away may occur. Documents CN109103539A, JP2019029245A and CN110199406A disclose known battery packs with security systems to protect them against fire or thermal runaway.

As a result, according to the configuration of the conventional battery pack, heat transfer between a plurality of battery modules included in the pack case is easily performed, and there is a problem in that thermal runaway propagation is not properly suppressed. In addition, this thermal runaway propagation may cause a fire or spread a fire as well as failure or damage of a battery pack, which may cause great damage.

Therefore, it is required to find a way to provide a battery pack capable of preventing thermal runaway in the event of an abnormal situation of a battery module, and an energy storage system and a vehicle including the battery pack.

### DISCLOSURE

### Technical Problem

Therefore, the present disclosure is directed to providing a battery pack capable of preventing thermal runaway in the event of an abnormal situation of a battery module, and an energy storage system and a vehicle including the battery pack.

However, the technical problem to be solved by the present disclosure is not limited to the above-mentioned problem, and other problems not mentioned will be clearly understood by those skilled in the art from the present disclosure described below.

### Technical Solution

This problem is solved by a battery pack according to claim 1.

Also, preferably, the thermal runaway suppression unit may keep a pressure at a center in the battery module higher than a pressure at an edge in the battery module in the event of an abnormal situation by injecting the fire extinguishing agent.

Also, preferably, the fire extinguishing agent supply line may be installed through an upper side of the battery module.

Also, preferably, the fire extinguishing agent supply line may be installed through a center part of the upper side of the battery module.

Also, preferably, the fire extinguishing agent supply line may include a line cover capable of covering the connection line.

Also, preferably, the fire extinguishing agent may be provided as a fire extinguishing gas having cooling performance.

In addition, the present disclosure provides an energy storage system comprising the battery pack according to the above embodiments.

In addition, the present disclosure provides a vehicle comprising the battery pack according to the above embodiments.

### Advantageous Effects

According to various embodiments as described above, it is possible to provide a battery pack capable of preventing thermal runaway in the event of an abnormal situation of a battery module, and an energy storage system and a vehicle including the battery pack.

In particular, when heat is generated in a specific battery module due to an event such as thermal runaway, it is possible to block or delay as much as possible the transfer of the generated heat to other adjacent modules.

In addition, it is possible to directly suppress an abnormal situation in a specific battery module due to an event such as thermal runaway.

Therefore, according to this aspect of the present disclosure, the thermal safety of the battery pack may be further improved.

In addition, various additional effects can be achieved by various embodiments of the present disclosure. Various effects of the present disclosure will be described in detail in each embodiment, or descriptions of effects that can be easily understood by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view for describing a battery pack according to an embodiment of the present disclosure.
FIG. 2 is a schematic exploded perspective view of the battery pack of FIG. 1.
FIG. 3 is a view for describing a fire extinguishing agent supply line of a thermal runaway suppression unit of the battery pack of FIG. 2.
FIG. 4 is a perspective view showing one battery module included in the battery pack according to an embodiment of the present disclosure.
FIG. 5 is a partial perspective view of a form in which some components of FIG. 4 are separated or removed.
FIG. 6 is a schematic cross-sectional view showing the inside of a battery module in the battery pack of FIG. 1.
FIGS. 7 to 9 are views for describing the operation of a thermal runaway suppression unit in an abnormal situation occurs in any one battery module of the battery pack of FIG. 1.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Meanwhile, in the present specification, terms indicating directions such as up, down, left, right, front, and back may be used, but these terms are only for convenience of description, and it is obvious to those skilled in the art that they may vary depending on the location of the target object or the location of the observer.

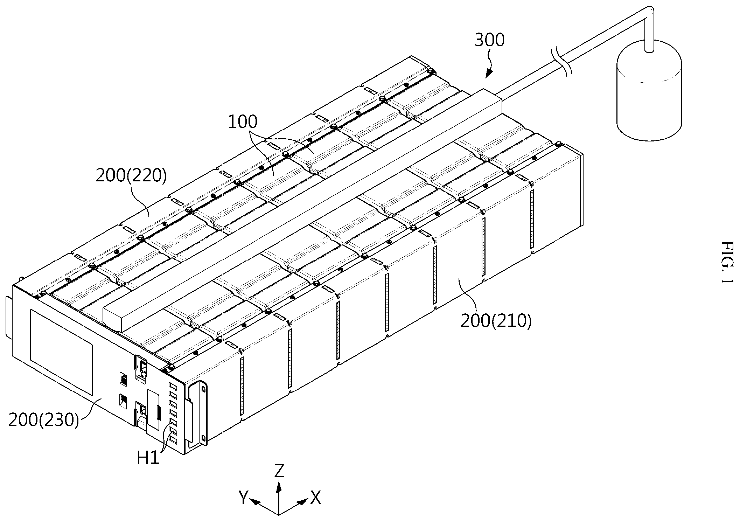

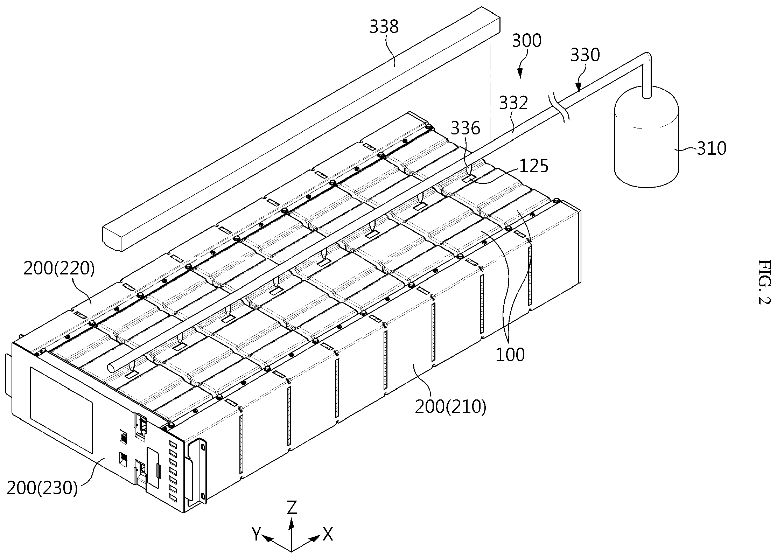

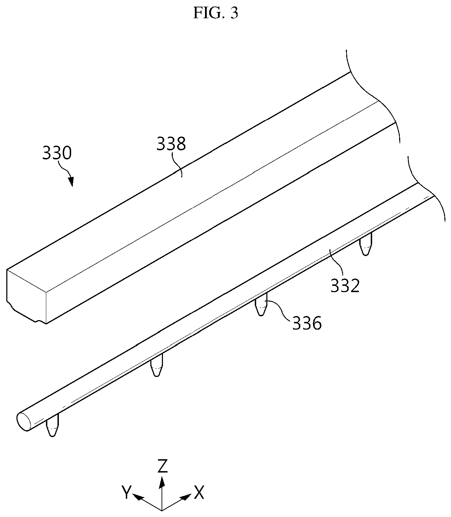

FIG. 1 is a view for describing a battery pack according to an embodiment of the present disclosure, FIG. 2 is a schematic exploded perspective view of the battery pack of FIG. 1, and FIG. 3 is a view for describing a fire extinguishing agent supply line of a thermal runaway suppression unit of the battery pack of FIG. 2.

Referring to FIGS. 1 to 3, a battery pack may include a battery module 100 and a thermal runaway suppression unit 300.

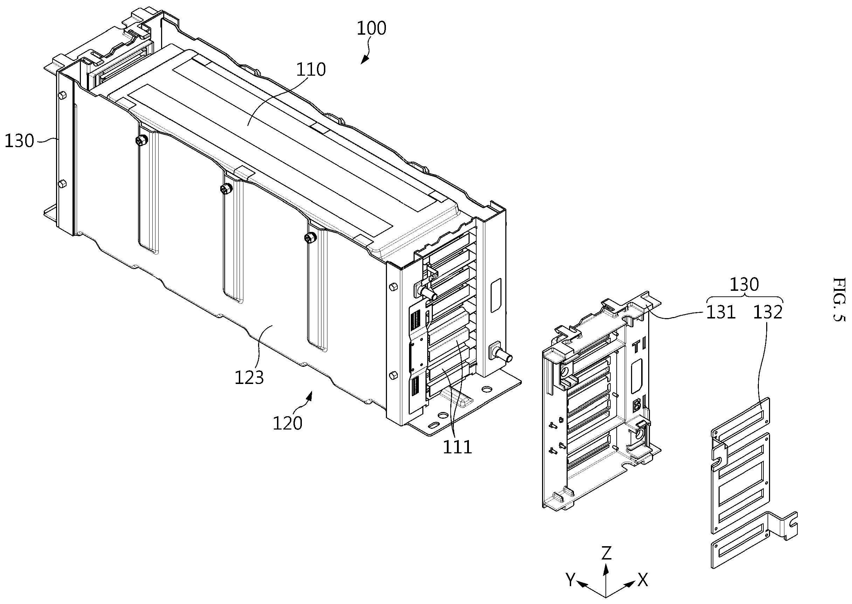

The battery module 100 may include at least one battery cell (110, see FIG. 5) to store and release energy. Here, each battery cell 110 may mean a secondary battery.

Also, a plurality of battery modules 100 may be included in a battery pack. In particular, in order to improve the capacity and/or output of the battery pack, a plurality of battery modules 100 may be included in the battery pack as shown in FIGS. 1 and 2. In this case, the plurality of battery modules 100 may be stacked in at least one direction. As an example, FIGS. 1 and 2 show a form in which eight battery modules 100 are arranged in an X-axis direction (left and right direction).

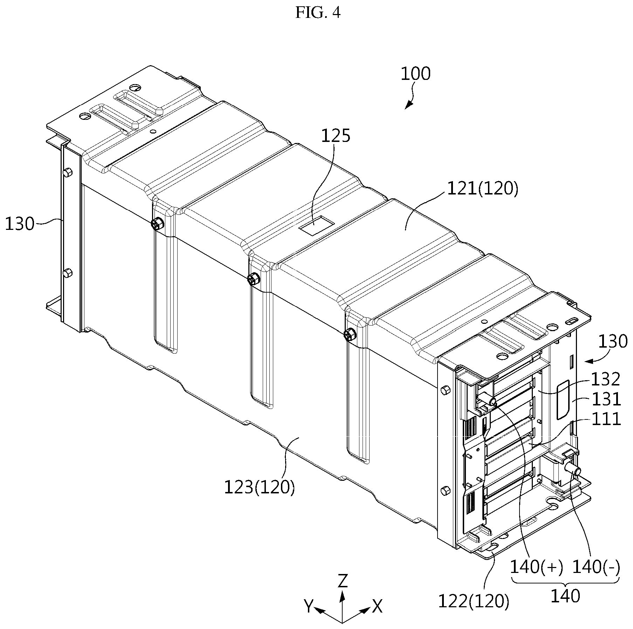

An example of a more specific configuration of the battery module 100 is shown in more detail in FIGS. 4 and 5.

The thermal runaway suppression unit 300 is mounted to one side of the battery module 100, and may be configured to form a positive pressure inside the battery module 100 when an abnormal situation occurs in any one battery cell 110.

In this embodiment, in this abnormal situation, since the thermal runaway suppression unit 300, which forms a positive pressure inside the battery module 100, suppresses an external air, specifically oxygen, from entering the inside of the battery module 100 where the abnormal situation occurs, it is possible to delay the thermal runaway situation from increasing as much as possible inside the battery module 100 in which the abnormal situation occurs.

Hereinafter, the thermal runaway suppression unit 300 will be described in more detail.

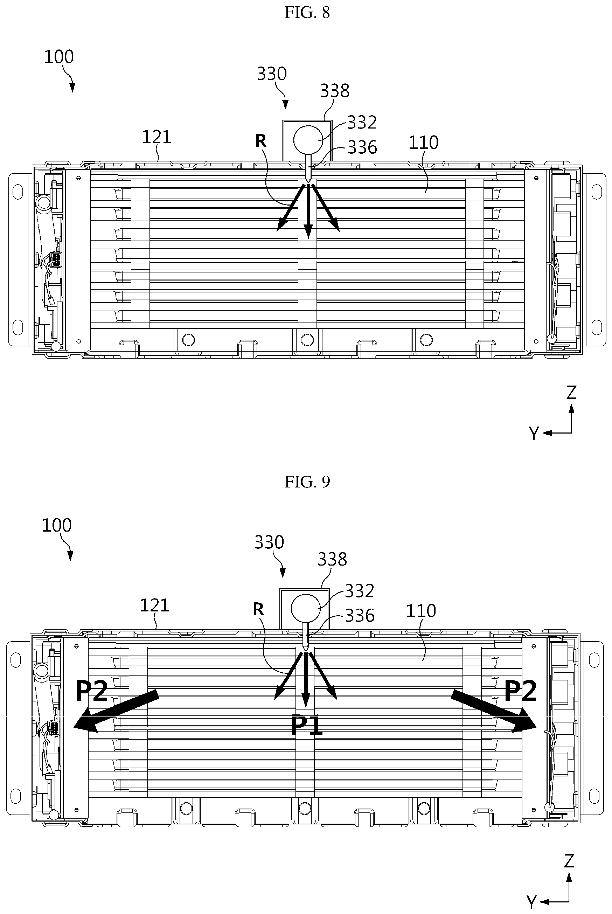

The thermal runaway suppression unit 300 may inject a fire extinguishing agent (R, see FIG. 8) into the battery module 100 in the event of the abnormal situation. Accordingly, the thermal runaway suppression unit 300 may directly suppress the abnormal situation such as a fire inside the battery module 100 where the abnormal situation occurs by injecting the fire extinguishing agent R.

Here, the fire extinguishing agent R may be provided as a fire extinguishing gas having cooling performance. For example, the fire extinguishing agent R may include a material having no reactivity and having a suffocating and cooling effect such as nitrogen or carbon dioxide.

Accordingly, in this embodiment, in the case of the abnormal situation, it is possible to promote faster and more rapid suppression of a fire situation through direct suffocating and cooling fire extinguishment inside the battery module 100 in which the abnormal situation has occurred.

Through the injection of the fire extinguishing agent R, the thermal runaway suppression unit 300 may keep the pressure (P1, see FIG. 9) at the center in the battery module 100 higher than the pressure at the edge (P2, see FIG. 9) in the battery module 100.

Accordingly, in this embodiment, through the thermal runaway suppression unit 300, the positive pressure inside the battery module 100 may be more effectively formed and maintained. Here, the injection of the fire extinguishing agent R may be performed up to about 10 minutes after the occurrence of an approximately abnormal situation is detected and the fire extinguishing agent R is injected.

Therefore, in this embodiment, a positive pressure is formed inside the battery module 100 where the abnormal situation occurs continuously for approximately 2 to 10 minutes by injecting the fire extinguishing agent R into the battery module 100 where the abnormal situation occurs, so that the inflow of an external air such as oxygen into the high-temperature battery module 100 where the abnormal situation occurs may be effectively blocked, and thus it is possible to suppress the heat transfer to adjacent battery modules 100 as much as possible while suppressing the internal situation of the battery module 100 in which the abnormal situation has occurred.

The thermal runaway suppression unit 300 may include a fire extinguishing tank 310 and a fire extinguishing agent supply line 330.

The fire extinguishing tank 310 is for supplying the fire extinguishing agent R, and may be provided outside the battery pack or mounted to one side of the battery pack. A storage space for storing the fire extinguishing agent R may be provided in the fire extinguishing tank 310.

The fire extinguishing agent supply line 330 connects the fire extinguishing tank 310 and the battery module 100, and may be installed through one side of the battery module 100. Specifically, the fire extinguishing agent supply line 330 is connected to each of the plurality of battery modules 100 and may connect the plurality of battery modules 100 to the fire extinguishing tank 310.

The fire extinguishing agent supply line 330 may be installed through the upper side of the battery module 100. Specifically, the fire extinguishing agent supply line 330 may be installed through the upper side of each of the plurality of battery modules 100. More specifically, the fire extinguishing agent supply line 330 may be installed through a center part of the upper side of each battery module 100 of the plurality of battery modules 100.

The fire extinguishing agent supply line 330 may include a connection line 332 and an injection nozzle 336.

The connection line 332 is connected to the fire extinguishing tank 310 and may have a predetermined length. The length of the connection line 332 may be designed in consideration of the number of the plurality of battery modules 100, the location of the fire extinguishing tank 310, or the like.

An inner channel for the flow of the fire extinguishing agent R may be provided in the connection line 332. The inner channel may communicate with the fire extinguishing tank 310 and an injection nozzle 336 to be described later.

The injection nozzle 336 is provided on the connection line 332 and may penetrate the battery module 100. The injection nozzle 336 may communicate with the inner channel of the connection line 332 to inject the fire extinguishing agent R into the battery module 100.

The injection nozzle 336 may be provided in plurality. The plurality of injection nozzles 336 are spaced apart from each other at a predetermined distance along the connection line 332 and may be installed through each of the plurality of battery modules 100.

According to claim 1, the injection nozzle 336 includes a glass bulb. The glass bulb 333 is configured to cover the injection hole of the injection nozzle 336 so as to seal the inner channel of the injection nozzle 336, but is configured to open the injection hole as at least a portion thereof is damaged when the inside of the battery module 100 is at a predetermined temperature or higher.

The glass bulb is filled with a predetermined material such as a predetermined liquid or gas. Such a predetermined material may have a property of increasing in volume as the temperature increases.

Specifically, the glass bulb may be broken, melted, or separated from the injection nozzle 336 by the volume expansion of the predetermined material at a predetermined temperature, for example 70°C to 100°C or higher, to open the injection hole, thereby guiding the injection of the fire extinguishing agent R into the battery module 100.

The fire extinguishing agent supply line 330 may further include a line cover 338.

The line cover 338 may be provided to cover the connection line 332. Specifically, the line cover 338 may be provided to cover the connection line 332 at one side of the battery modules 100. More specifically, the line cover 338 may be provided to cover a portion of the connection line 332 disposed on the upper side of the battery modules 100.

The line cover 338 may prevent damage or breakage of the connection line 332 that may be caused by an external shock or the like. In addition, the line cover 338 may prevent the fire extinguishing agent R, which may leak due to damage or breakage of the connection line 332, from leaking to the outside.

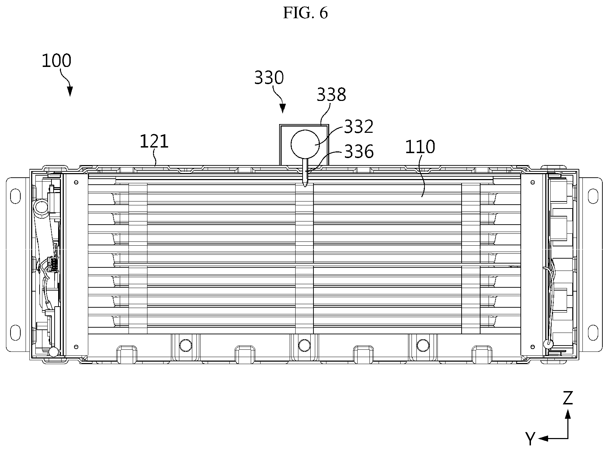

FIG. 4 is a perspective view showing one battery module included in the battery pack according to an embodiment of the present disclosure, FIG. 5 is a partial perspective view of a form in which some components of FIG. 4 are separated or removed, and FIG. 6 is a schematic cross-sectional view showing the inside of a battery module in the battery pack of FIG. 1.

Referring to FIGS. 4 to 6 and FIGS. 1 to 3 above, the battery module 100 may include a battery cell 110 (secondary battery).

Here, the battery cell 110 may include an electrode assembly, an electrolyte solution (electrolyte), and a battery case. Although a pouch-type secondary battery is shown in FIGS. 5 and 6, other types of secondary batteries, such as cylindrical batteries or prismatic batteries, may be included in the battery module 100.

Such a secondary battery may be included in plurality. For example, as shown in the drawing, the cell assembly may be configured in a form in which a plurality of pouch-type secondary batteries are stacked in a vertical direction in a state in which the plurality of pouch-type secondary batteries are laid down. At this time, the electrode leads 111 of each battery may be in direct contact with each other or electrically connected through a bus bar or the like.

In addition, the battery module 100 may include a module terminal 140. For example, in the battery module 100, the electrode leads 111 of each battery cell 110 may be located on the front and/or rear side, and the module terminal 140 may be located in a form electrically connected to the electrode lead 111.

In particular, the module terminal 140 is located on the front and/or rear side of the battery module 100 and may be configured to protrude forward and/or rearward. Moreover, each battery module 100 may include a positive electrode module terminal (+) and a negative electrode module terminal (-) as the module terminal 140. At this time, the positive electrode module terminal (+) and the negative electrode module terminal (-) may be located on the same side of the battery module 100, for example, on the front (-Y-axis direction) side as shown in the drawing.

The module terminal 140 may allow the secondary battery (battery cell 110) included in the battery module 100 to be electrically connected to other components outside the battery module 100, such as other battery modules 100.

The battery module 100 may include a module case 120 and a bus bar assembly 130.

Here, the module case 120 may be configured to accommodate at least one secondary battery in an inner space. For example, the module case 120 may include an upper plate 121, a lower plate 122, and a side plate 123 as shown in the drawing. In addition, the plurality of plates may be coupled to each other to accommodate the battery assembly in a limited inner space.

Here, some plates included in the module case 120, such as the lower plate 122 and the side plate 123 (left plate, right plate), may be integrated with each other. In this case, the integrated shape of the lower plate 122 and the side plate 123 may be approximately U-shaped.

Alternatively, the lower plate 122, the side plate 123, and the upper plate 121 may be configured in a tubular and monoframe form integrated with each other. Each plate of the module case 120 may define an inner space in a state of being coupled to each other. In addition, the cell assembly may be accommodated in this inner space.

The module case 120 may include a nozzle mounting portion 125 for penetrating mounting of the injection nozzle 336 of the fire extinguishing agent supply line 330. Specifically, the nozzle mounting portion 125 may be provided to the upper plate 121. More specifically, the nozzle mounting portion 125 may be provided at the central of the upper side of the upper plate 121.

Through this nozzle mounting portion 125, the injection nozzle 336 of the fire extinguishing agent supply line 330 may penetrate the inside of the module case 120 to inject the fire extinguishing agent (R, see FIG. 8) in the event of the abnormal situation.

The module case 120 may be configured such that at least one side is open. In addition, the electrode lead 111 of the cell assembly may be positioned in this open portion.

In particular, the battery module 100 may include a bus bar assembly 130 to be coupled to the open portion of the module case 120. For example, as shown in FIGS. 5 and 6, the bus bar assembly 130 may be coupled to front and rear opening portions of the module case 120. The electrode leads 111 of the battery assembly may be located in the front and rear portions of the module case 120.

In addition, the bus bar assembly 130 may be coupled with the electrode lead 111. As a more specific example, the bus bar assembly 130 may include a bus bar housing 131 and a module bus bar 132 as shown in FIGS. 4 and 5.

Here, the bus bar housing 131 may be made of an electrically insulating material, such as a plastic material. In addition, the bus bar housing 131 may be configured such that the module bus bar 132 is seated and fixed.

Also, the module bus bar 132 may be made of an electrically conductive material, such as a metal material. In addition, the module bus bar 132 may be configured to electrically connect two or more electrode leads 111 or to transmit sensing information to a control unit such as a battery management system (BMS) by being connected to at least one electrode lead 111.

As such, in the case of the battery module 100 included in the battery pack according to the present disclosure, only a specific portion, for example, the front side and the rear side where the bus bar assembly 130 is located may be opened and the remaining portions may be configured to be sealed.

In this case, when a venting gas or the like is generated inside the battery module 100, the venting gas may be induced to be discharged only to the open portion of the module case 120, for example, the front side and the rear side where the bus bar assembly 130 is located. In particular, a slit may be formed in the bus bar assembly 130 so that the electrode lead 111 can pass therethrough.

The pack case 200 may be provided on at least one side of the plurality of battery modules 100. In addition, the pack case 200 may be configured to cover at least a part of the outer side of the battery module 100.

Moreover, the pack case 200 may be configured to define an inner space and accommodate a plurality of battery module 100 in the inner space. That is, the pack case 200 may be configured to surround at least a part of the outer side of the stack of the battery modules 100.

For example, the pack case 200 may include a front case 210, a rear case 220, and a side case 230 as shown in FIGS. 1 and 2. In this case, the pack case 200 is located at the front end, the rear end, and the left side of the stack of the battery modules 100, and may be said to cover the corresponding portions of the stack of the battery modules 100.

A pack terminal may be provided on at least one side of the pack case 200. Such a pack terminal may function as a terminal capable of exchanging power with an external charging device or discharging device for the battery pack.

The pack case 200 may be configured to guide gas when gas is generated from at least one battery module 100 among the plurality of battery modules 100 included in the battery pack. In particular, the pack case 200 may guide the discharge direction of the gas by allowing the venting gas to flow along the inner surface.

In this case, it can be said that at least a part of the pack case 200 functions as a duct in the battery pack. In addition, in the pack case 200, a discharge hole H1 may be formed on at least one side so that the venting gas can be discharged to the outside.

In this configuration, the pack case 200 may include a melting member configured to be melted by the venting gas discharged from the battery module 100. That is, the venting gas discharged from the battery module 100 may have a high temperature.

Furthermore, the venting gas discharged from the battery module 100 may include flames, sparks, high-temperature electrodes or active material particles. Therefore, the melting member may be melted by coming into contact with or becoming adjacent to this hot venting gas.

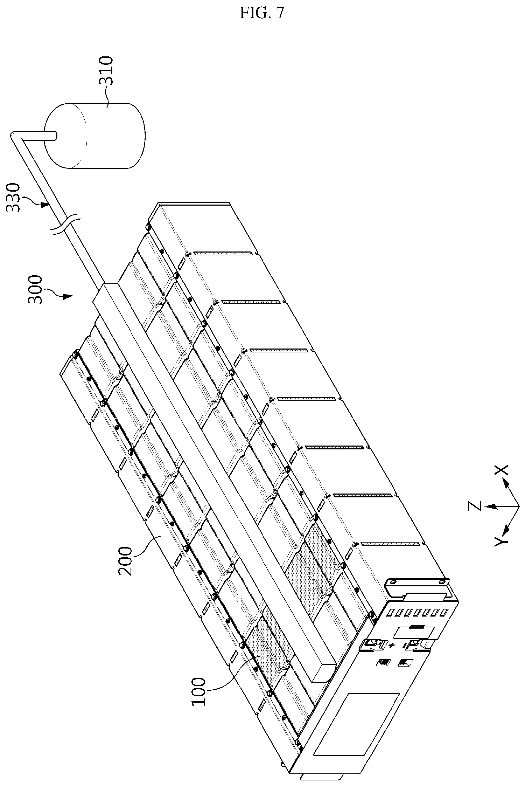

FIGS. 7 to 9 are views for describing the operation of a thermal runaway suppression unit in an abnormal situation occurs in any one battery module of the battery pack of FIG. 1.

Referring to FIGS. 7 to 9, a thermal event may occur due to an abnormal situation such as overheating in a specific battery module 100 of the battery pack. At this time, the thermal runaway suppression unit 300 may inject fire extinguishing agent R into the specific battery module 100 in which an abnormal situation has occurred.

Specifically, the fire extinguishing tank 310 of the thermal runaway suppression unit 300 may supply the fire extinguishing agent R to the fire extinguishing agent supply line 330. Then, the fire extinguishing agent R, which has moved through the inner channel of the connection line 332 of the fire extinguishing agent supply line 330, may be injected into the specific battery module 100 where the abnormal situation has occurred, from the fire extinguishing agent supply line 330 through the injection nozzle 336 mounted through the specific battery module 100 where the abnormal situation has occurred.

Here, as the injection nozzle 336 is provided at the center of the upper side of the battery module 100, the fire extinguishing agent R may be injected from the center of the upper side of the battery module 100 and move to the lower side and both side edges inside the battery module 100.

When the fire extinguishing agent R is injected through the injection nozzle 336, inside the battery module 100, the pressure at the center P1 in the battery module 100 equipped with the injection nozzle 336 may be kept higher than the pressure P2 at both side edges in the battery module 100 to form a positive pressure inside the battery module 100.

Here, the thermal runaway suppression unit 300 can control to form and maintain a positive pressure inside the specific battery module 100 for about 10 minutes from the occurrence or detection of a thermal event in the specific battery module 100 as described above.

Accordingly, in this embodiment, through the thermal runaway suppression unit 300, it is possible to suppress an external air such as oxygen from entering the inside of the battery module 100 through both side edges of the battery module 100 as much as possible, so that a larger fire or explosion that may be caused through the inflow of oxygen may be suppressed as much as possible.

**In** addition, in this embodiment, through the direct injection of the fire extinguishing agent R into the battery module 100, the cooling fire extinguishment inside the battery module 100 in which the abnormal situation has occurred may be is implemented in itself, so that an abnormal situation such as a fire may be more quickly and directly suppressed.

Therefore, in this embodiment, through the thermal runaway suppression unit 300, thermal runaway toward battery modules 100 adjacent to the battery module 100 in which the abnormal situation has occurred may be effectively prevented.

The battery pack according to the present disclosure may further include various other components of the battery pack known at the time of filing the present disclosure. For example, the battery pack according to the present disclosure may further include components such as a battery management system (BMS), a current sensor, and a fuse.

An energy storage system according to the present disclosure may include one or more battery packs according to the present disclosure. In particular, the energy storage system may include a plurality of battery packs according to the present disclosure in a form electrically connected to each other in order to have a large energy capacity.

The energy storage system according to an embodiment of the present disclosure may be an industrial energy storage system, or a residential (building) energy storage system for home or office used to store energy in a house, office, or building.

In addition, the energy storage system according to the present disclosure may further include various other components of energy storage systems known at the time of filing of this application. Moreover, the energy storage system may be used in various places or devices, such as a smart grid system or an electric charging station.

Also, a vehicle according to the present disclosure may include at least one battery pack according to the present disclosure. In addition, the vehicle according to the present disclosure may further include various other components included in a vehicle in addition to the battery pack. For example, the vehicle according to the present disclosure may further include a vehicle body, a motor, and a control device such as an electronic control unit (ECU), in addition to the battery pack according to the present disclosure.

According to various embodiments as described above, it is possible to provide a battery pack capable of preventing thermal runaway in the event of an abnormal situation of a battery module 100, and an energy storage system and a vehicle including the battery pack.

While the preferred embodiments of the present disclosure have been shown and described, the present disclosure is not limited to the specific embodiments described above, various modifications may be made by one of ordinary skill in the art to which the present disclosure pertains without departing from the scope of the present disclosure as defined by the claims, and these modifications should not be individually understood from the technical feature or prospect of the present disclosure.

## Claims

1. A battery pack comprising:
a battery module (100) having at least one battery cell (110); and
a thermal runaway suppression unit (300) mounted to one side of the battery module (100) and configured to form a positive pressure inside the battery module when an abnormal situation occurs in any one battery cell (110), wherein the thermal runaway suppression unit (300) injects a fire extinguishing agent (R) into the battery module in case of the abnormal situation
wherein the thermal runaway suppression unit (300) includes:
a fire extinguishing tank (310) for supplying the fire extinguishing agent; and
a fire extinguishing agent supply line (330) configured to connect the fire extinguishing tank (310) and the battery module (100) and installed through one side of the battery module (100),
wherein the fire extinguishing agent supply line (330) includes:
a connection line (332) connected to the fire extinguishing tank and provided with a predetermined length; and
an injection nozzle (336) provided on the connection line to penetrate the battery module, **characterized in that** the injection nozzle (336) comprises a glass bulb (333) configured to cover the injection hole of the injection nozzle (336) so as to seal the inner channel of the injection nozzle (336), and configured to open the injection hole as at least a portion thereof is damaged when the inside of the battery module (100) is at a predetermined temperature or higher, the glass bulb (333) being filled with a predetermined material such as a liquid or gas.

2. The battery pack according to claim 1, wherein the thermal runaway suppression unit (300) keeps a pressure (P1) at a center in the battery module higher than a pressure (P2) at an edge in the battery module in the event of an abnormal situation by injecting the fire extinguishing agent.

3. The battery pack according to claim 1, wherein the fire extinguishing agent supply line (330) is installed through an upper side of the battery module (100).

4. The battery pack according to claim 3, wherein the fire extinguishing agent supply line (330) is installed through a center part of the upper side of the battery module.

5. The battery pack according to claim 1, wherein the fire extinguishing agent supply line (330) includes a line cover (338) capable of covering the connection line (332).

6. The battery pack according to claim 1, wherein the fire extinguishing agent (R) is provided as a fire extinguishing gas having cooling performance.

7. An energy storage system, comprising the battery pack according to any one of claims 1 to 6.

8. A vehicle, comprising the battery pack according to any one of claims 1 to 6.

## Patentansprüche

1. Batteriepack, umfassend:
ein Batteriemodul (100), welches wenigstens eine Batteriezelle (110) aufweist; und
eine Unterdrückungseinheit (300) eines thermischen Durchgehens, welche an einer Seite des Batteriemoduls (100) angebracht ist und dazu eingerichtet ist, einen positiven Druck in dem Batteriemodul zu bilden, wenn eine anormale Situation in einer beliebigen Batteriezelle (110) auftritt, wobei die Unterdrückungseinheit (300) eines thermischen Durchgehens ein Feuerlöschmittel (R) in das Batteriemodul in einem Fall der anormalen Situation einspritzt,
wobei die Unterdrückungseinheit (300) eines thermischen Durchgehens umfasst:
einen Feuerlöschtank (310) für ein Zuführen des Feuerlöschmittels; und
eine Feuerlöschmittel-Zuführleitung (330), welche dazu eingerichtet ist, den Feuerlöschtank (310) und das Batteriemodul (100) zu verbinden, und welche durch eine Seite des Batteriemoduls (100) installiert ist,
wobei die Feuerlöschmittel-Zuführleitung (330) umfasst:
eine Verbindungsleitung (332), welche mit dem Feuerlöschtank verbunden ist und mit einer vorbestimmten Länge bereitgestellt ist; und
eine Einspritzdüse (336), welche an der Verbindungsleitung bereitgestellt ist, um das Batteriemodul zu penetrieren, **dadurch gekennzeichnet, dass** die Einspritzdüse (336) einen Glaskolben (333) umfasst, welcher dazu eingerichtet ist, das Einspritzloch der Einspritzdüse (336) abzudecken, um den inneren Kanal der Einspritzdüse (336) abzudichten, und welcher dazu eingerichtet ist, das Einspritzloch zu öffnen, während wenigstens ein Abschnitt davon beschädigt ist, wenn das Innere des Batteriemoduls (100) eine vorbestimmte Temperatur oder mehr aufweist, wobei der Gaskolben (333) mit einem vorbestimmten Material wie einer Flüssigkeit oder einem Gas gefüllt ist.

2. Batteriepack nach Anspruch 1, wobei die Unterdrückungseinheit (300) eines thermischen Durchgehens in dem Fall einer anormalen Situation einen Druck (P1) an einem Mittelpunkt in dem Batteriemodul höher als ein Druck (P2) an einem Rand in dem Batteriemodul durch ein Einspritzen des Feuerlöschmittels hält.

3. Batteriepack nach Anspruch 1, wobei die Feuerlöschmittel-Zuführleitung (330) durch eine obere Seite des Batteriemoduls (100) installiert ist.

4. Batteriepack nach Anspruch 3, wobei die Feuerlöschmittel-Zuführleitung (330) durch einen Mittelteil der oberen Seite des Batteriemoduls installiert ist.

5. Batteriepack nach Anspruch 1, wobei die Feuerlöschmittel-Zuführleitung (330) eine Leitungsabdeckung (338) umfasst, welche zu einem Abdecken der Verbindungsleitung (332) in der Lage ist.

6. Batteriepack nach Anspruch 1, wobei das Feuerlöschmittel (R) als ein Feuerlöschgas bereitgestellt ist, welches eine Kühlungsleistung aufweist.

7. Energiespeichersystem, umfassend den Batteriepack nach einem der Ansprüche 1 bis 6.

8. Fahrzeug, umfassend den Batteriepack nach einem der Ansprüche 1 bis 6.

## Revendications

1. Bloc-batterie comprenant :
un module de batterie (100) ayant au moins une cellule de batterie (110) ; et
une unité de suppression d'emballement thermique (300) montée sur un côté du module de batterie (100) et configurée pour former une pression positive à l'intérieur du module de batterie lorsqu'une situation anormale se produit dans une quelconque cellule de batterie (110), dans lequel l'unité de suppression d'emballement thermique (300) injecte un agent d'extinction d'incendie (R) dans le module de batterie dans le cas de la situation anormale
dans lequel l'unité de suppression d'emballement thermique (300) comporte :
un réservoir d'extinction d'incendie (310) pour fournir l'agent d'extinction d'incendie ; et
une conduite d'alimentation en agent d'extinction d'incendie (330) configurée pour raccorder le réservoir d'extinction d'incendie (310) au module de batterie (100) et installée à travers un côté du module de batterie (100),
dans lequel la conduite d'alimentation en agent d'extinction d'incendie (330) comporte :
une conduite de raccordement (332) raccordée au réservoir d'extinction d'incendie et pourvue d'une longueur prédéterminée ; et
une buse d'injection (336) disposée sur la conduite de raccordement pour pénétrer dans le module de batterie, **caractérisé en ce que** la buse d'injection (336) comprend une ampoule en verre (333) configurée pour recouvrir le trou d'injection de la buse d'injection (336) de manière à fermer de manière étanche le canal interne de la buse d'injection (336), et configurée pour ouvrir le trou d'injection lorsqu'au moins une partie de celui-ci est endommagée lorsque l'intérieur du module de batterie (100) est à une température prédéterminée ou supérieure, l'ampoule en verre (333) étant remplie d'un matériau prédéterminé tel qu'un liquide ou un gaz.

2. Bloc-batterie selon la revendication 1, dans lequel l'unité de suppression d'emballement thermique (300) maintient une pression (P1) au niveau d'un centre du module de batterie supérieure à une pression (P2) au niveau d'un bord du module de batterie dans le cas d'une situation anormale en injectant l'agent d'extinction d'incendie.

3. Bloc-batterie selon la revendication 1, dans lequel la conduite d'alimentation en agent d'extinction d'incendie (330) est installée à travers un côté supérieur du module de batterie (100).

4. Bloc-batterie selon la revendication 3, dans lequel la conduite d'alimentation en agent d'extinction d'incendie (330) est installée à travers une partie centrale du côté supérieur du module de batterie.

5. Bloc-batterie selon la revendication 1, dans lequel la conduite d'alimentation en agent d'extinction d'incendie (330) comporte un couvercle de conduite (338) capable de recouvrir la conduite de raccordement (332).

6. Bloc-batterie selon la revendication 1, dans lequel l'agent d'extinction d'incendie (R) est fourni sous forme d'un gaz d'extinction d'incendie ayant des performances de refroidissement.

7. Système de stockage d'énergie, comprenant le bloc-batterie selon l'une quelconque des revendications 1 à 6.

8. Véhicule, comprenant le bloc-batterie selon l'une quelconque des revendications 1 à 6.
